# FASCICULE DE BREVET EUROPEEN

(11) **EP 3 900 422 B1**
(45) Date de publication et mention de la délivrance du brevet: **17.07.2024**
(21) Numéro de dépôt: 19813556.8
(22) Date de dépôt: 06.12.2019
(51) Int. Cl.: H04W 16/10

(54) **PROCÉDÉ DE SÉLECTION D'UN CANAL WIFI OPTIMISÉ**
OPTIMIERTES VERFAHREN ZUR AUSWAHL EINES WLAN-KANALS
OPTIMISED METHOD FOR SELECTING A WI-FI CHANNEL

(30) Priorité: 20.12.2018 FR 1873460
(43) Date de publication de la demande: 27.10.2021
(73) Titulaire: Softathome, 92700 Colombes (FR)
(72) Inventeur: ROYER, Nicolas, 75015 Paris (FR); MAKOWSKI, Wojciech, 78100 Saint-Germain-en-Laye (FR)
(74) Mandataire: IPAZ
(86) Numéro de dépôt international: PCT/EP2019/084038
(87) Numéro de publication internationale: WO 2020/126560

(56) Documents cités:
- EP-A1- 3 059 992
- US-A1- 2004 166 852
- US-A1- 2004 203 808

## Description

La présente invention se rapporte à un procédé pour sélectionner un canal optimum dans un réseau répondant à l'une des normes IEEE 802.11, dit réseau wifi.

La technologie wifi a été développée de façon complètement autonome, dans le sens où il n'y a pas d'interaction standardisée entre plusieurs points d'accès.

Les communications wifi peuvent être des fréquences dans deux bandes différentes : 2.4 et 5 GHz.

Dans la bande 2.4 GHz par exemple, on distingue 14 canaux possibles. Chaque canal comporte une fréquence centrale autour de laquelle le signal utile est modulé dans une plage de fréquences de 20 à 22 MHz.

Par exemple, les canaux n°1, n°2 et n°3 possèdent respectivement les fréquences centrales suivantes : 2.412, 2.417 et 2.422GHz. Avec une modulation autour de chaque fréquence centrale de +/- 11MHz, on comprend que ces trois canaux se chevauchent.

Le nombre de canaux disponibles étant limité, dans une zone de grande densité où plusieurs points d'accès wifi sont présents, une bonne utilisation des canaux par des points d'accès voisins est un facteur clé pour la qualité des communications wifi.

Dans une zone dense, le fait que des canaux se chevauchent provoque des interférences entre deux utilisateurs utilisant deux canaux distincts mais se chevauchant. Le signal de l'un est vu comme un signal perturbateur. Ce qui baisse considérablement la performance des réseaux wifi.

Un tel problème peut se rencontrer notamment dans zone habitée où plusieurs passerelles domestiques (HGW pour « home gateway » en anglais) ou répéteurs/extendeurs wifi ou points d'accès wifi de différents utilisateurs sont très proches. US 2004/166852 décrit un système permettant à un point d'accès de sélectionner automatiquement des canaux de communication sans fil. Un réseau sans fil peut inclure plusieurs points d'accès, chacun choisissant automatiquement un canal de manière à optimiser son utilisation. De plus, les points d'accès peuvent effectuer un réglage automatique de la puissance de sorte que plusieurs points d'accès puissent fonctionner sur le même canal tout en minimisant les interférences entre eux. La charge des stations sans fil est équilibrée entre les points d'accès afin d'optimiser la bande passante de l'utilisateur.

La présente invention a pour objet d'optimiser l'utilisation du réseau wifi dans une zone de grande densité.

Un autre objet de l'invention est la mise en place d'un mécanisme simplifié de sélection de canal wifi.

On atteint au moins l'un des objectifs précités avec un pour sélectionner un canal optimum dans un réseau répondant à l'une des normes IEEE 802.11, dit réseau wifi, ce réseau comprenant plusieurs passerelles domestiques équipées chacune d'une puce wifi configurée pour mettre en oeuvre à la fois un mode client et un mode point d'accès, les passerelles domestiques étant à portée de communication les unes des autres. Le procédé selon l'invention comprend une étape d'établissement d'une négociation point-à-point entre les passerelles domestiques de façon à ce que chaque passerelle domestique sélectionne un canal wifi optimum.

Le procédé selon l'invention permet à chaque passerelle domestique d'entrer en négociation avec des passerelles domestiques voisines de façon à sélectionner un canal optimum qu'elle pourra utiliser pour communiquer avec des appareils de type client se connectant à cette passerelle domestique comme point d'accès. Ainsi, il n'est pas nécessaire d'avoir un système central pour attribuer à chaque passerelle domestique un canal optimum.

Les passerelles domestiques ont la capacité de communiquer entre elles.

La solution selon la présente invention ne nécessite pas de modifier les standards wifi actuels.

Avantageusement, une ou plusieurs passerelles domestiques peut gérer non seulement son propre point d'accès wifi mais également un ou plusieurs extendeurs ou répéteurs wifi, chacun étant un point d'accès wifi. Dans ce cas, la négociation entreprise par une telle passerelle concerne non seulement le canal utilisé par son propre point d'accès wifi mais également les canaux utilisés par les points d'accès wifi des extendeurs et répéteurs wifi qu'elle gère.

Selon une caractéristique avantageuse de l'invention, un canal wifi optimum utilisé par une première passerelle domestique est un canal wifi qui ne se chevauche pas avec des canaux wifi utilisés par les autres passerelles domestiques. Une telle réalisation permet d'éviter des interférences avec des utilisateurs proches.

De préférence, lors de la négociation, la passerelle ayant initié cette négociation sélectionne un canal libre d'utilisation et séparé des autres canaux utilisés par au moins deux canaux libres.

Ainsi, on est sûr d'éviter le recouvrement des canaux.

Chaque canal utilise une fréquence centrale autour duquel le signal de communication est modulé sur une plage de fréquences allant jusqu'à 22 MHz. Sélectionner des canaux distants permet d'éviter le recouvrement des plages.

Selon l'invention, lors de la négociation, les passerelles participant à cette négociation sélectionnent des canaux de la manière permettant l'optimisation globale de l'utilisation du wifi par l'ensemble des points d'accès wifi concernés.

Selon une caractéristique avantageuse de l'invention, la négociation débute lorsqu'un appareil associé à une passerelle domestique tente d'établir une communication wifi.

On peut aussi envisager à ce que la négociation entre deux passerelles domestiques débute à chaque fois qu'une passerelle domestique détecte la présence de l'autre passerelle domestique ou quand les conditions radio changent d'une manière significative ou cycliquement. Cela permet de maintenir à jour une répartition efficace des canaux.

Selon une caractéristique avantageuse de l'invention, lors de la négociation, les processus de sécurisation et d'authentification peuvent être mis en oeuvre en utilisant un identifiant SSID uniquement dédié à la communication point-à-point entre deux passerelles domestiques. Il s'agit d'un identifiant SSID utilisé uniquement pour réaliser la connexion point à point. -Ceci permet de simplifier le processus de découverte des passerelles voisines ayant la capacité d'entreprendre une telle négociation ainsi que de séparer plus facilement les différents flux de paquets au niveau protocolaire.

Il est également possible d'utiliser un autre SSID spécifique déjà utilisé pour les besoins d'autres services, notamment par l'opérateur pour les besoins des services communautaires par exemple, comme le « Hotspot Wi-Fi » d'Orange^{®} par exemple.

Selon une autre caractéristique avantageuse de l'invention, lors de la négociation, les processus de sécurisation et d'authentification peuvent être mis en oeuvre en utilisant un identifiant SSID conventionnel. C'est-à-dire que chaque passerelle domestique utilise son identifiant SSID dans la communication point à point avec une autre passerelle domestique et dans la communication avec l'appareil d'un utilisateur tel que par exemple un téléphone portable.

Par ailleurs, lors de la négociation, les processus de sécurisation et d'authentification peuvent être communs à plusieurs fournisseurs d'accès à Internet.

Avantageusement, le canal wifi fonctionne dans la bande de fréquences à 2,4 ou 5 GHz.

Selon une caractéristique avantageuse de l'invention, la négociation est réalisée deux par deux dans une communication bidirectionnelle.

Il est également prévu un système comprenant plusieurs passerelles domestiques dans un réseau répondant à l'une des normes IEEE 802.11, ces passerelles domestiques étant équipées chacune d'une puce wifi configurée pour mettre en oeuvre à la fois un mode client et un mode point d'accès, les passerelles domestiques étant à portée de communication les unes aux autres.

Selon l'invention, chaque passerelle domestique est configurée pour établir une négociation point-à-point avec les autres passerelles domestiques de façon à ce que chaque passerelle domestique sélectionne un canal wifi optimum.

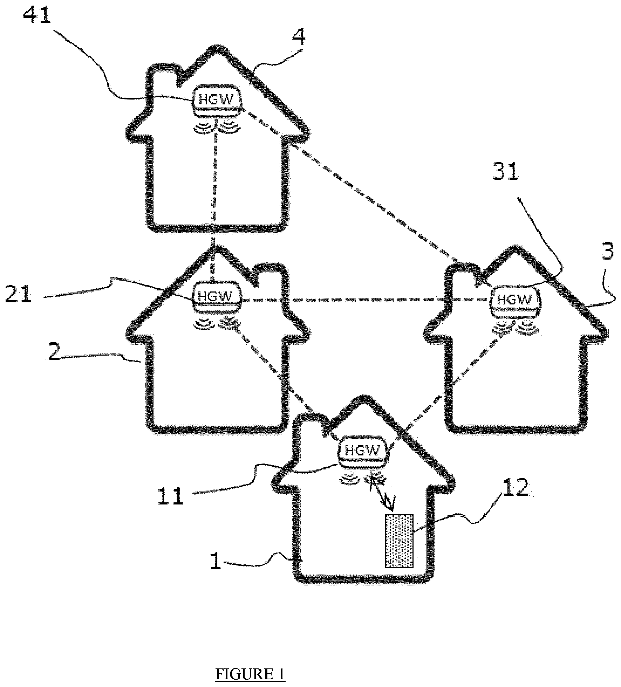

D'autres avantages et caractéristiques de l'invention apparaîtront à l'examen de la description détaillée d'un mode de mise en oeuvre nullement limitatif, et de l'unique figure 1 annexée :
[Fig. 1] est une vue schématique de plusieurs passerelles domestiques installées respectivement dans différents domestiques.

Les modes de réalisation qui seront décrits dans la suite ne sont nullement limitatifs ; on pourra notamment mettre en oeuvre des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont prévus pour être combinés entre eux dans toutes les combinaison où rien ne s'y oppose sur le plan technique.

L'unique figure 1 est une vue schématique de plusieurs passerelles domestiques installées respectivement dans différents domestiques.

On distingue quatre domiciles 1 à 4 équipés chacun d'une passerelle domestique 11, 21, 31 et 41 respectivement.

Les domiciles 1, 2 et 3 sont suffisamment proches pour que les passerelles 11, 21 et 31 puissent communiquer entre elles.

Le domicile 4 n'est pas voisin du domicile 1 de sorte que les deux passerelles domestiques 11 et 41 ne peuvent pas communiquer directement entre elles. Dans le domicile 1, on distingue un appareil 12 constitué de matériels et logiciels nécessaires pour communiquer avec la passerelle domestique 11 par wifi. La passerelle domestique 11 est capable de relayer, de façon bidirectionnelle la communication entre cet appareil 12 et un réseau externe de type internet.

Selon l'invention, pour éviter que la communication de l'appareil 12 soit perturbée par la présence d'autres communications gérées par les passerelles domestiques 21 et 31, on initie une négociation entre ces trois passerelles 11, 21 et 31.

Pour ce faire, chaque passerelle domestique est équipée d'une puce wifi capable de mettre en oeuvre à la fois un mode client et un mode point d'accès. La passerelle 11 initie alors une communication bidirectionnelle point à point (peer-to-peer) avec la passerelle domestique 21 puis avec la passerelle domestique 31 de façon à vérifier quels canaux sont déjà utilisés.

La passerelle domestique 11 sélectionne ensuite un canal libre, suffisamment éloigné des canaux déjà utilisés. Par exemple, si la passerelle domestique 21 utilise le canal n°1 et la passerelle domestique 31 utilise le canal n°6, la passerelle domestique 11 peut choisir le canal n°11. En d'autres termes, la négociation avec les autres passerelles peut être équivalente à une analyse de l'occupation du spectre, de façon à identifier les canaux utilisés, pour ensuite sélectionner un canal libre.

La négociation entre les passerelles peut également aboutir à des changements des canaux déjà utilisés afin d'optimiser leur usage global.

La passerelle domestique 11 est en mode client lorsqu'elle initie une communication avec une autre passerelle domestique, cette dernière étant en mode point d'accès.

Une fois le canal libre sélectionné, l'appareil 12 peut établir sa connexion wifi, en utilisant le canal n°11, à internet via la passerelle domestique 11. La passerelle domestique 11 est en mode point d'accès lorsqu'elle communique avec l'appareil 12 qui est en mode client. Tout en communiquant avec l'appareil, la passerelle domestique selon l'invention peut également communiquer en mode client avec une autre passerelle considérée comme point d'accès.

Il est à noter que la passerelle domestique 21 par exemple est apte à négocier avec l'ensemble des passerelles y compris la passerelle domestique 41.

Bien sûr, l'invention n'est pas limitée aux exemples qui viennent d'être décrits et de nombreux aménagements peuvent être apportés à ces exemples sans sortir du cadre de l'invention.

## Revendications

1. Procédé pour sélectionner un canal optimum dans un réseau répondant à l'une des normes IEEE 802.11, dit réseau wifi, ce réseau comprenant plusieurs passerelles domestiques équipées chacune d'une puce wifi configurée pour mettre en oeuvre à la fois un mode client et un mode point d'accès, les passerelles domestiques étant à portée de communication les unes des autres, le réseau comprenant également un ou plusieurs extendeurs ou répéteurs wifi,
ce procédé comprenant une étape d'établissement d'une négociation point-à-point entre les passerelles domestiques de façon à ce que chaque passerelle domestique sélectionne un canal wifi optimum ;
**caractérisé en ce qu'**une ou plusieurs passerelles domestiques gère non seulement son propre point d'accès wifi mais également le ou les extendeurs ou répéteurs wifi, chacun étant un point d'accès wifi ; la négociation entreprise par une telle passerelle concernant non seulement le canal utilisé par son propre point d'accès wifi mais également les canaux utilisés par les points d'accès wifi des extendeurs et répéteurs wifi qu'elle gère.

2. Procédé selon la revendication 1, **caractérisé en ce qu'**un canal wifi optimum utilisé par une première passerelle domestique est un canal wifi qui ne se chevauche pas avec des canaux wifi utilisés par les autres passerelles domestiques.

3. Procédé selon l'une quelconque des revendications précédentes, **caractérisé en ce que** lors de la négociation, la passerelle ayant initié cette négociation sélectionne un canal libre d'utilisation et séparé des autres canaux utilisés par au moins deux canaux libres.

4. Procédé selon l'une quelconque des revendications précédentes, **caractérisé en ce que** lors de la négociation, les passerelles participant à cette négociation sélectionnent des canaux de la manière permettant l'optimisation globale de l'utilisation du wifi par l'ensemble des points d'accès wifi concernés.

5. Procédé selon l'une quelconque des revendications précédentes, **caractérisé en ce que** la négociation débute lorsqu'un appareil associé à une passerelle domestique tente d'établir une communication wifi.

6. Procédé selon l'une quelconque des revendications précédentes, **caractérisé en ce que** la négociation entre deux passerelles domestiques débute à chaque fois qu'une passerelle domestique détecte la présence de l'autre passerelle domestique.

7. Procédé selon l'une quelconque des revendications précédentes, **caractérisé en ce que** lors de la négociation, les processus de sécurisation et d'authentification sont mis en oeuvre en utilisant un identifiant SSID uniquement dédié à la communication point-à-point entre deux passerelles domestiques.

8. Procédé selon l'une quelconque des revendications 1 à 6, **caractérisé en ce que** lors de la négociation, les processus de sécurisation et d'authentification sont mis en oeuvre en utilisant un identifiant SSID spécifique déjà utilisé pour les besoins d'autres services.

9. Procédé selon l'une quelconque des revendications 1 à 6, **caractérisé en ce que** lors de la négociation, les processus de sécurisation et d'authentification sont mis en oeuvre en utilisant un identifiant SSID conventionnel.

10. Procédé selon l'une quelconque des revendications 7 à 9, **caractérisé en ce que** lors de la négociation, les processus de sécurisation et d'authentification sont communs à plusieurs fournisseurs d'accès à Internet.

11. Procédé selon l'une quelconque des revendications précédentes, **caractérisé en ce que** le canal wifi fonctionne dans la bande de fréquences à 2,4 ou 5 GHz.

12. Procédé selon l'une quelconque des revendications précédentes, **caractérisé en ce que** la négociation est réalisée deux par deux dans une communication bidirectionnelle.

13. Système comprenant plusieurs passerelles domestiques dans un réseau répondant à l'une des normes IEEE 802.11, ces passerelles domestiques étant équipées chacune d'une puce wifi configurée pour mettre en oeuvre à la fois un mode client et un mode point d'accès, les passerelles domestiques étant à portée de communication les unes aux autres, le système comprenant également un ou plusieurs extendeurs ou répéteurs wifi,
**caractérisé en ce que** chaque passerelle domestique est configurée pour établir une négociation point-à-point avec les autres passerelles domestiques de façon à ce que chaque passerelle domestique sélectionne un canal wifi optimum,
et **en ce qu'**une ou plusieurs passerelles domestiques sont configurées pour gérer chacun non seulement son propre point d'accès wifi mais également le ou les extendeurs ou répéteurs wifi, chacun étant un point d'accès wifi ; la négociation entreprise par une telle passerelle concernant non seulement le canal utilisé par son propre point d'accès wifi mais également les canaux utilisés par les points d'accès wifi des extendeurs et répéteurs wifi qu'elle gère..

## Patentansprüche

1. Verfahren zum Auswählen eines optimalen Kanals in einem Netzwerk, das einem der IEEE 802.11-Standards entspricht, genannt WIFI-Netzwerk, wobei dieses Netzwerk eine Vielzahl von Home-Gateways umfasst, die jeweils mit einem WIFI-Chip ausgestattet sind, der so konfiguriert ist, dass er sowohl einen Client-Modus als auch einen Access-Point-Modus implementiert, wobei sich die Home-Gateways in Kommunikationsreichweite zueinander befinden und das Netzwerk außerdem einen oder mehrere WIFI-Extender oder Repeater umfasst, dieses Verfahren umfasst einen Schritt zum Herstellen einer Peer-to-Peer-Verhandlung zwischen den Home-Gateways, sodass jedes Home-Gateway einen optimalen WIFI-Kanal auswählt; **dadurch gekennzeichnet, dass** ein oder mehrere Home-Gateways nicht nur seinen eigenen WIFI-Access-Point, sondern auch den/die WIFI-Extender oder Repeater verwalten, wobei jeder ein WIFI-Access-Point ist; wobei die von einem solchen Gateway durchgeführte Verhandlung nicht nur den von seinem eigenen WIFI-Access-Point verwendeten Kanal betrifft, sondern auch die von den WIFI-Access-Points der von ihm verwalteten WIFI-Extender und Repeater verwendeten Kanäle.

2. Verfahren nach Anspruch 1, **dadurch gekennzeichnet, dass** ein optimaler WIFI-Kanal, der von einem ersten Home-Gateway verwendet wird, ein WIFI-Kanal ist, der sich nicht mit WIFI-Kanälen überschneidet, die von den anderen Home-Gateways verwendet werden.

3. Verfahren nach einem der vorhergehenden Ansprüche, **dadurch gekennzeichnet, dass** das Gateway, das diese Verhandlung eingeleitet hat, während der Verhandlung einen freien Kanal auswählt, der von den anderen verwendeten Kanälen durch mindestens zwei freie Kanäle getrennt ist.

4. Verfahren nach einem der vorhergehenden Ansprüche, **dadurch gekennzeichnet, dass** die an dieser Verhandlung beteiligten Gateways während der Verhandlung Kanäle auf eine Weise auswählen, die eine allgemeine Optimierung der WIFI-Nutzung durch alle betroffenen WIFI-Zugangspunkte ermöglicht.

5. Verfahren nach einem der vorhergehenden Ansprüche, **dadurch gekennzeichnet, dass** die Verhandlung beginnt, wenn ein mit einem Heim-Gateway verbundenes Gerät versucht, eine WIFI-Kommunikation herzustellen.

6. Verfahren nach einem der vorhergehenden Ansprüche, **dadurch gekennzeichnet, dass** die Verhandlung zwischen zwei Heim-Gateways jedes Mal beginnt, wenn ein Heim-Gateway die Anwesenheit des anderen Heim-Gateways erkennt.

7. Verfahren nach einem der vorhergehenden Ansprüche, **dadurch gekennzeichnet, dass** während der Verhandlung die Sicherheits- und Authentifizierungsprozesse unter Verwendung einer SSID-Kennung implementiert werden, die ausschließlich der Peer-to-Peer-Kommunikation zwischen zwei Heim-Gateways gewidmet ist.

8. Verfahren nach einem der Ansprüche 1 bis 6, **dadurch gekennzeichnet, dass** während der Aushandlung die Sicherheits- und Authentifizierungsprozesse unter Verwendung einer spezifischen SSID-Kennung durchgeführt werden, die bereits für die Anforderungen anderer Dienste verwendet wird.

9. Verfahren nach einem der Ansprüche 1 bis 6, **dadurch gekennzeichnet, dass** während der Aushandlung die Sicherheits- und Authentifizierungsprozesse unter Verwendung einer herkömmlichen SSID-Kennung durchgeführt werden.

10. Verfahren nach einem der Ansprüche 7 bis 9, **dadurch gekennzeichnet, dass** während der Aushandlung die Sicherheits- und Authentifizierungsprozesse für mehrere Internet-Zugangsanbieter gleich sind.

11. Verfahren nach einem der vorhergehenden Ansprüche, **dadurch gekennzeichnet, dass** der WIFI-Kanal im Frequenzband von 2,4 oder 5 GHz arbeitet.

12. Verfahren nach einem der vorhergehenden Ansprüche, **dadurch gekennzeichnet, dass** die Aushandlung paarweise in bidirektionaler Kommunikation durchgeführt wird.

13. System mit mehreren Home-Gateways in einem Netzwerk, das einem der IEEE 802.11-Standards entspricht, wobei diese Home-Gateways jeweils mit einem WIFI-Chip ausgestattet sind, der so konfiguriert ist, dass er sowohl einen Client-Modus als auch einen Access-Point-Modus implementiert, wobei sich die Home-Gateways in Kommunikationsreichweite zueinander befinden, wobei das System außerdem einen oder mehrere WIFI-Extender oder Repeater umfasst, **dadurch gekennzeichnet, dass** jedes Home-Gateway so konfiguriert ist, dass es eine Peer-to-Peer-Verhandlung mit den anderen Home-Gateways herstellt, sodass jedes Home-Gateway einen optimalen WIFI-Kanal auswählt, und dass ein oder mehrere Home-Gateways so konfiguriert sind, dass sie jeweils nicht nur ihren eigenen WIFI-Access-Point, sondern auch den/die WIFI-Extender oder Repeater verwalten, wobei es sich bei jedem um einen WIFI-Access-Point handelt; wobei die von einem solchen Gateway durchgeführte Verhandlung nicht nur den von seinem eigenen WIFI-Access-Point verwendeten Kanal betrifft, sondern auch die von den WIFI-Access-Points der von ihm verwalteten WIFI-Extender und Repeater verwendeten Kanäle.

## Claims

1. Method for selecting an optimal channel in a network meeting one of the IEEE 802.11 standards, called wifi network, this network comprising several home gateways each equipped with a wifi chip configured to implement both a client mode and an access point mode, the home gateways being within communication range of each other, the network also comprising one or more wifi extenders or repeaters,
this method comprising a step of establishing a peer-to-peer negotiation between the home gateways so that each home gateway selects an optimal wifi channel;
**characterized in that** one or more home gateways manage not only its own wifi access point but also the wifi extender(s) or repeater(s), each being a wifi access point; the negotiation undertaken by such a gateway concerning not only the channel used by its own wifi access point but also the channels used by the wifi access points of the wifi extenders and repeaters that it manages.

2. Method according to claim 1, **characterized in that** an optimal wifi channel used by a first home gateway is a wifi channel which does not overlap with wifi channels used by the other home gateways.

3. Method according to any one of the preceding claims, **characterized in that** during the negotiation, the gateway having initiated this negotiation selects a channel free of use and separated from the other channels used by at least two free channels.

4. Method according to any one of the preceding claims, **characterized in that** during the negotiation, the gateways participating in this negotiation select channels in the manner allowing the overall optimization of the use of wifi by all the wifi access points concerned.

5. Method according to any one of the preceding claims, **characterized in that** the negotiation begins when a device associated with a home gateway attempts to establish a wifi communication.

6. Method according to any one of the preceding claims, **characterized in that** the negotiation between two home gateways begins each time a home gateway detects the presence of the other home gateway.

7. Method according to any one of the preceding claims, **characterized in that** during the negotiation, the security and authentication processes are implemented using an SSID identifier solely dedicated to peer-to-peer communication between two home gateways.

8. Method according to any one of claims 1 to 6, **characterized in that** during the negotiation, the security and authentication processes are implemented using a specific SSID identifier already used for the needs of other services .

9. Method according to any one of claims 1 to 6, **characterized in that** during the negotiation, the security and authentication processes are implemented using a conventional SSID identifier.

10. Method according to any one of claims 7 to 9, **characterized in that** during the negotiation, the security and authentication processes are common to several Internet access providers.

11. Method according to any one of the preceding claims, **characterized in that** the wifi channel operates in the 2.4 or 5 GHz frequency band.

12. Method according to any one of the preceding claims, **characterized in that** the negotiation is carried out two by two in bidirectional communication.

13. System comprising several home gateways in a network meeting one of the IEEE 802.11 standards, these home gateways each being equipped with a wifi chip configured to implement both a client mode and an access point mode, the home gateways being within communication range of each other, the system also comprising one or more wifi extenders or repeaters,
**characterized in that** each home gateway is configured to establish a peer-to-peer negotiation with the other home gateways so that each home gateway selects an optimal wifi channel,
and **in that** one or more home gateways are configured to each manage not only its own wifi access point but also the wifi extender(s) or repeater(s), each being a wifi access point; the negotiation undertaken by such a gateway concerning not only the channel used by its own wifi access point but also the channels used by the wifi access points of the wifi extenders and repeaters that it manages.
